# EUROPEAN PATENT APPLICATION

(11) **EP 4 205 955 A1**
(43) Date of publication of application: **05.07.2023**
(21) Application number: 22217203.3
(22) Date of filing: 29.12.2022
(51) Int. Cl.: B29C 65/36, B29K 101/12, B29K 105/06, B29K 307/04

(54) **INDUCTION WELDING WITH AN ELECTROMAGNETIC FIELD CONCENTRATOR**

(30) Priority: 30.12.2021 US 202117566203
(71) Applicant: Rohr, Inc., Chula Vista, CA 91910-2098 (US)
(72) Inventor: WOODS, Jeffrey D., Beaumont, 92223 (US); HUANG, Jonathan S., Pasadena, 91101 (US); VAN TOOREN, Michael, San Diego, 92122 (US)
(74) Representative: Dehns

(57) **Abstract**

During a manufacturing method, an induction welder (20) is provided that includes a concentrator (36) and a coil (42). The concentrator (36) includes a receptacle (52) and a face surface (64). The receptacle (52) projects vertically into the concentrator (36) from the face surface (64) to an end (66) of the receptacle (52). The receptacle (52) extends laterally within the concentrator (36) between opposing sides (60A, 60B) of the receptacle (52). The receptacle (52) extends longitudinally within the concentrator (36) along a centerline (44). The coil (42) is seated and extends longitudinally along the centerline (44) within the receptacle (52). A first thermoplastic body (24A) arranged with a second thermoplastic body (24B) are provided. The first thermoplastic body (24A) is located vertically next to the face surface (64). The first thermoplastic body (24A) is induction welded to the second thermoplastic body (24B). The induction welding includes: generating an electromagnetic field (70) with the coil (42); and concentrating the electromagnetic field (70) with the concentrator (36) onto a region (68) of the first thermoplastic body (24A).

## Description

### BACKGROUND

### 1. Technical Field

This disclosure (invention) relates generally to joining bodies together and, more particularly, to induction welding.

### 2. Background Information

It is known in the art to join discrete bodies together using induction welding. These joined bodies are typically constructed from like materials; e.g., fiber-reinforced composite. The discrete bodies are induction welded together using an induction welder. Various types and configurations of induction welders are known in the art. While these known induction welders have various benefits, there is still room in the art for improvement. For example, there is a need in the art for an induction welder and method that can provide an enhanced and/or tuned electromagnetic field.

### SUMMARY OF THE DISCLOSURE

According to an aspect of the present invention, there is provided a manufacturing method. During this manufacturing method, an induction welder is provided that includes a concentrator and a coil. The concentrator includes a receptacle and a face surface. The receptacle projects vertically into the concentrator from the face surface to an end of the receptacle. The receptacle extends laterally within the concentrator between opposing sides of the receptacle. The receptacle extends longitudinally within the concentrator along a centerline. The coil is seated and extends longitudinally along the centerline within the receptacle. A first thermoplastic body arranged with a second thermoplastic body are provided. The first thermoplastic body is located vertically next to the face surface. The first thermoplastic body is induction welded to the second thermoplastic body. The induction welding includes: generating an electromagnetic field with the coil; and concentrating the electromagnetic field with the concentrator onto a region of the first thermoplastic body.

According to another aspect of the present invention, there is provided an induction welder for induction welding thermoplastic material. This induction welder includes a coil and a concentrator. The coil is configured to generate an electromagnetic field. The concentrator is configured to concentrate the electromagnetic field onto a region of the thermoplastic material. The concentrator includes a face surface and a receptacle. The receptacle projects vertically into the concentrator from an opening in the face surface to an end of the receptacle. The receptacle extends laterally within the concentrator between opposing sides of the receptacle. The receptacle extends longitudinally within the concentrator along a centerline. The coil is vertically recessed into and extends longitudinally along the centerline through the coil receptacle.

According to another aspect of the present invention, there is provided another induction welder for induction welding thermoplastic material. This induction welder includes a coil and a concentrator. The coil is configured to generate an electromagnetic field. The concentrator is configured to concentrate the electromagnetic field onto a region of the thermoplastic material. The concentrator includes a face surface and a receptacle. The receptacle projects vertically into the concentrator from the face surface to an end of the receptacle. The receptacle extends laterally within the concentrator between opposing sides of the receptacle. The opposing sides of the receptacle flare laterally out as the receptacle extends vertically to an opening in the face surface. The receptacle extends longitudinally within the concentrator along a centerline. The coil is disposed in and extends longitudinally along the centerline through the coil receptacle.

The following optional features may be applied to any of the above aspects.

The coil may be thermally coupled to the concentrator through a conductive interface.

The coil may be bonded to and thermally coupled with the concentrator.

The concentrator may also include a receptacle surface. At least a portion of the receptacle surface may extend to an edge between the receptacle surface and the face surface. The portion of the receptacle surface may be configured with a straight sectional geometry.

The concentrator may also include a receptacle surface. At least a portion of the receptacle surface may extend to an edge between the receptacle surface and the face surface. The portion of the receptacle surface may be configured with a curved sectional geometry.

An open space, for example a first open space, may extend vertically between the first thermoplastic body and the coil.

An open space, for example a second open space, may extend vertically between the first thermoplastic body and the concentrator.

The coil may be vertically flush with the face surface.

The coil may be recessed vertically into the receptacle from the face surface.

The opposing sides of the receptacle may laterally flare out as the receptacle extends vertically within the concentrator to the face surface.

The concentrator may also include a receptacle surface at least partially forming one of the opposing sides of the receptacle. At least a portion of the receptacle surface, which extends to an edge between the receptacle surface and the face surface, may be configured with a straight sectional geometry.

The concentrator may also include a receptacle surface at least partially forming one of the opposing sides of the receptacle. At least a portion of the receptacle surface, which extends to an edge between the receptacle surface and the face surface, may be configured with a non-straight sectional geometry.

The concentrator may also include a receptacle surface at least partially forming one of the opposing sides of the receptacle. The receptacle surface may extend along a trajectory to an edge between the receptacle surface and the face surface. The trajectory may include a vertical component and a lateral component.

The concentrator may also include a receptacle surface at least partially forming one of the opposing sides of the receptacle. The receptacle surface may extend along a trajectory to an edge between the receptacle surface and the face surface. The trajectory may only include (or substantially include, or consist of, e.g. consist essentially of) a vertical component.

The concentrator may also include a receptacle surface forming at least the end of the receptacle. The receptacle surface may be configured with a non-straight sectional geometry.

The coil may be thermally coupled to the concentrator through a conductive interface.

The coil and/or the concentrator may be cooled using liquid coolant.

The cooling may include directing the liquid coolant through a bore of the coil.

The coil may have a circular cross-sectional geometry.

The coil may have a polygonal cross-sectional geometry.

The present disclosure may include any one or more of the individual features disclosed above and/or below alone or in any combination thereof.

The foregoing features and the operation of the invention will become more apparent in light of the following description and the accompanying drawings.

### BRIEF DESCRIPTION OF THE DRAWINGS

FIG. 1 is a schematic illustration of an induction welder for induction welding a workpiece.
FIG. 2 is a schematic illustration of a coil structure configured with a power source and a cooling device.
FIG. 3 is a side sectional illustration of an electromagnetic field concentrator.
FIG. 4 is a cross-sectional illustration of the electromagnetic field concentrator.
FIG. 5 is a side sectional illustration of a portion of the induction welder next to the workpiece.
FIG. 6 is a cross-sectional illustration of a portion of the induction welder next to the workpiece.
FIG. 7A is an illustration depicting an unfocused electromagnetic field generated by an induction welding coil.
FIG. 7B is an illustration depicting an electromagnetic field generated by the induction welding coil and concentrated by the electromagnetic field concentrator.
FIGS. 8A-8D are cross-sectional illustrations of a portion of the induction welder with various different electromagnetic field configurations next to the workpiece.
FIG. 9 is a flow diagram of a method for manufacturing the workpiece.
FIG. 10 is a cross-sectional illustration of a portion of the induction welder next to the workpiece during an induction welding of the workpiece.
FIG. 11 is a cross-sectional illustration of the induction welding coil configured with a square geometry.
FIG. 12 is a cross-sectional illustration of the induction welding coil configured with a triangular geometry.
FIGS. 13 and 14 are schematic illustrations of various arrangements for directly cooling the electromagnetic field concentrator.

### DETAILED DESCRIPTION

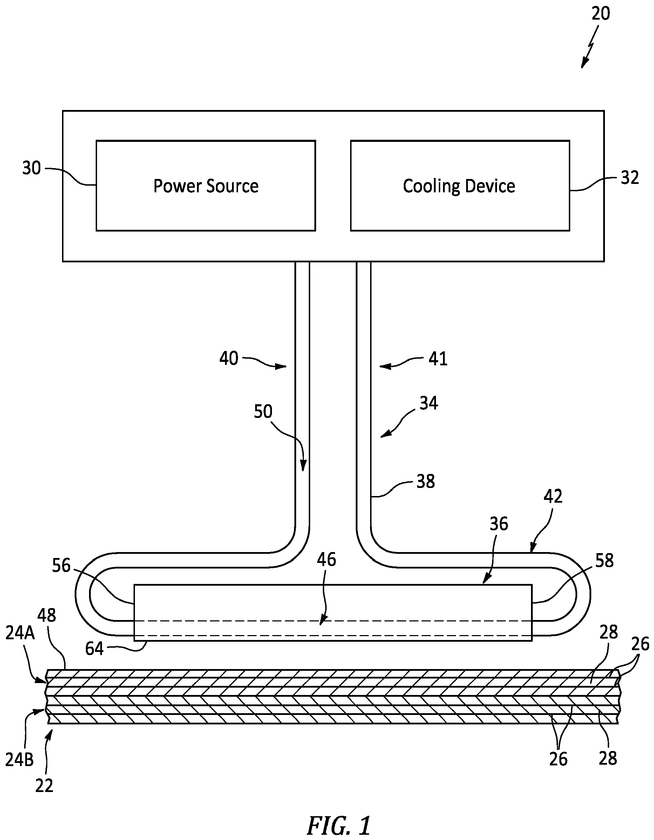

FIG. 1 illustrates an induction welder 20 for induction welding a workpiece 22. This workpiece 22 may include two or more bodies 24A and 24B (generally referred to as "24"), where the induction welder 20 may induction weld these workpiece bodies 24 together. Each of the workpiece bodies 24 is formed from an induction weldable material such as, but not limited to, a fiber-reinforced thermoplastic. Each of the workpiece bodies 24, for example, may be constructed from or otherwise include fiber reinforcement 26 (e.g., carbon fibers) embedded within a thermoplastic matrix 28. The induction welder 20 of FIG. 1 includes a power source 30, a cooling device 32, a coil structure 34 and an electromagnetic (EM) field concentrator 36.

The power source 30 is configured to generate a periodic electrical current. The power source 30, for example, may be configured as a high-frequency current source. The power source 30 may be or otherwise include an alternating current (AC) generator, transformer, amplifier, etc. Alternatively, the power source 30 may include a direct current (DC) generator, transformer, amplifier, battery, etc. electrically coupled with an oscillator. The present disclosure, however, is not limited to such exemplary power sources.

The cooling device 32 is configured to flow fluid (e.g., liquid coolant) through the coil structure 34. The cooling device 32, for example, may be configured as a liquid pump coupled with a coolant reservoir and a heat exchanger. The present disclosure, however, is not limited to such an exemplary cooling device.

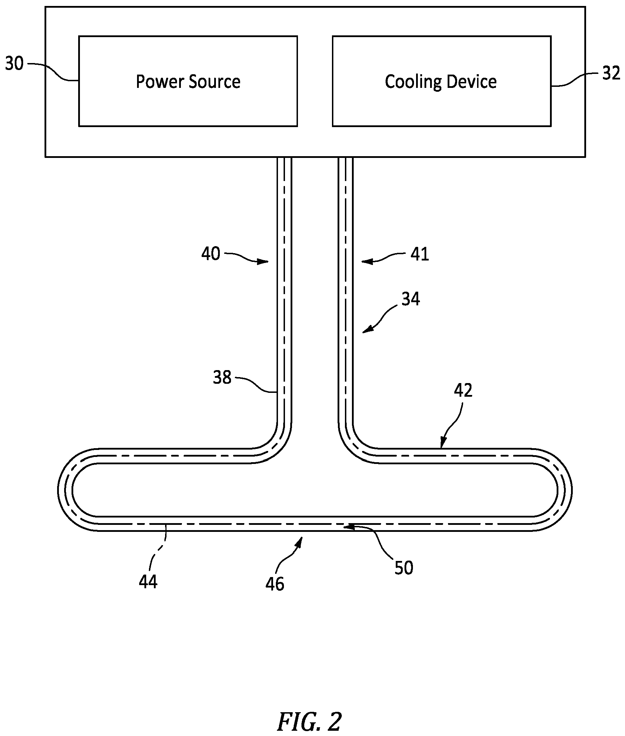

Referring to FIG. 2, the coil structure 34 may be formed from or otherwise include a single length (or multiple end-to-end interconnected lengths) of electrically conductive tubing 38. This tubing 38 is constructed from electrically conductive material such as metal; e.g., copper (Cu). The coil structure 34 of FIG. 2 includes an (e.g., tubular) electrical first lead 40, an (e.g., tubular) electrical second lead 41 and an (e.g., tubular) induction welding coil 42.

The first lead 40 may be a first section of the coil structure 34 and its electrically conductive tubing 38. The second lead 41 may be a second section of the coil structure 34 and its electrically conductive tubing 38. The first lead 40 may be arranged parallel with the second lead 41. The first lead 40 and the second lead 41 are connected to opposing ends of the induction welding coil 42. The first lead 40 and the second lead 41 electrically couple the induction welding coil 42 to respective terminals of the power source 30.

The induction welding coil 42 may be an intermediate section of the coil structure 34 and its electrically conductive tubing 38 longitudinally between the first lead 40 and the second lead 41. The induction welding coil 42 may be configured as an elongated loop. The induction welding coil 42 of FIG. 2, for example, extends along a non-straight (e.g., generally racetrack shaped) portion of a longitudinal centerline 44 of the coil structure 34 between and to the coil ends. The induction welding coil 42 of FIG. 2 includes at least (or only) one welding (e.g., bottom side) segment 46. The induction welding coil 42, for example, may be configured as a single hairpin coil. The welding segment 46 may be configured to substantially match a contour of an exterior surface 48 of the workpiece 22 to be induction welded; see FIG. 1. The welding segment 46, for example, may be straight where the workpiece 22 has a flat exterior surface. The welding segment 46 may alternatively be non-straight (e.g., curved, compound, etc.) where the workpiece exterior surface is a non-straight; e.g., curved, compound, etc. The present disclosure, however, is not limited to the foregoing exemplary induction welding coil configurations.

The coil structure 34 is configured with an internal bore 50. This internal bore 50 extends longitudinally along the coil centerline 44 through the coil structure 34 and its components 40-42 between and to opposing distal ends of the coil structure 34 and its leads 40 and 41. The internal bore 50 is fluidly coupled with the cooling device 32 through couplings at the structure ends. The first lead 40 and the second lead 41 thereby fluidly couple the induction welding coil 42 to the cooling device 32.

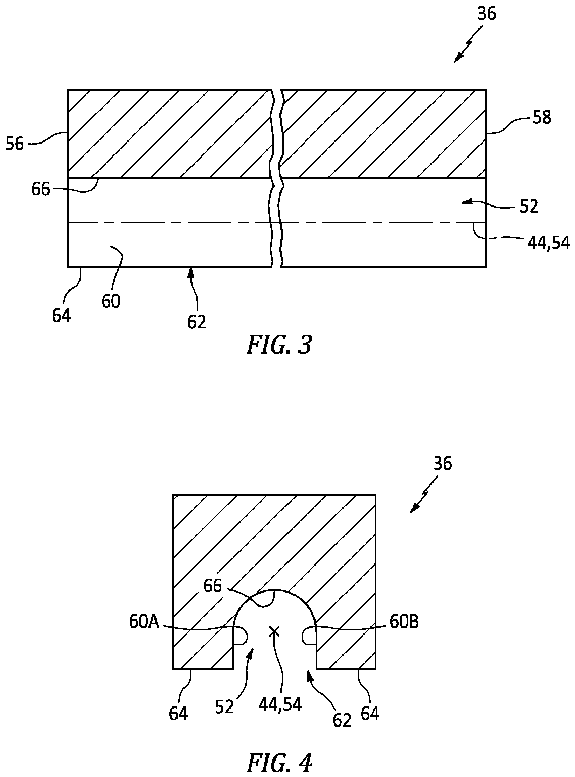

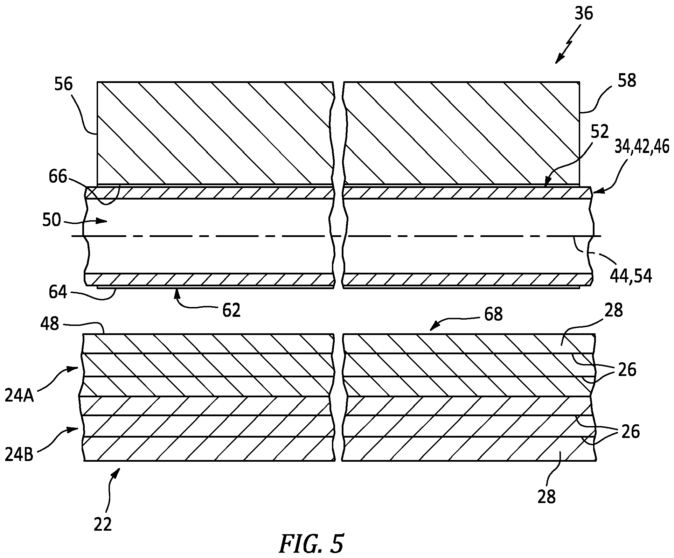

Referring to FIG. 3, the EM field concentrator 36 is configured with an induction welding coil receptacle 52; e.g., a channel. This coil receptacle 52 extends longitudinally along a longitudinal centerline 54 of the coil receptacle 52 through the EM field concentrator 36 between and to a first end 56 of the EM field concentrator 36 and a second end 58 of the EM field concentrator 36, where the receptacle centerline 54 may be parallel with and/or coaxial with the coil centerline 44 along the welding segment 46; see also FIG. 5. Referring to FIG. 4, the coil receptacle 52 extends laterally within the EM field concentrator 36 between and to opposing sides 60A and 60B (generally referred to as "60") of the coil receptacle 52. The coil receptacle 52 projects vertically (e.g., partially) into the EM field concentrator 36 from a receptacle opening 62 in a face surface 64 of the EM field concentrator 36 to an end 66 of the coil receptacle 52. This face surface 64 may be configured to substantially match the exterior surface contour of the workpiece 22 to be induction welded; see FIG. 1. The face surface 64, for example, may be flat where the workpiece 22 has the flat exterior surface. The face surface 64 may alternatively have a non-flat (e.g., curved, compound, concave, convex, etc.) where the workpiece exterior surface is a non-flat.

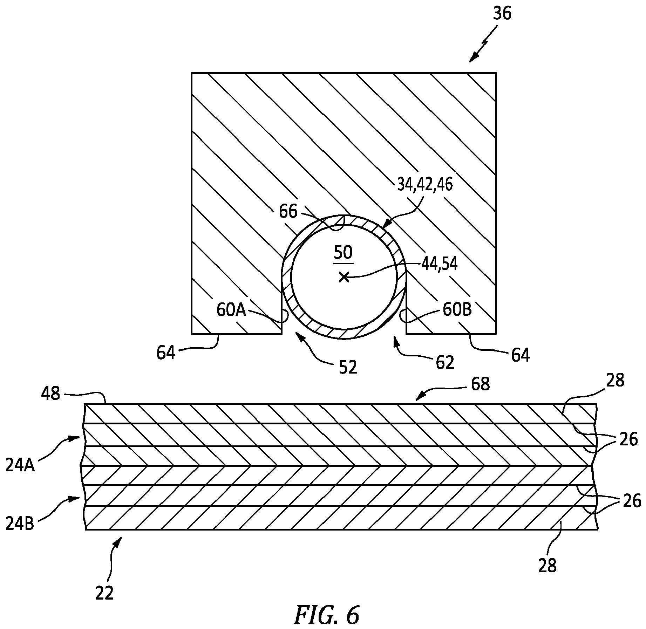

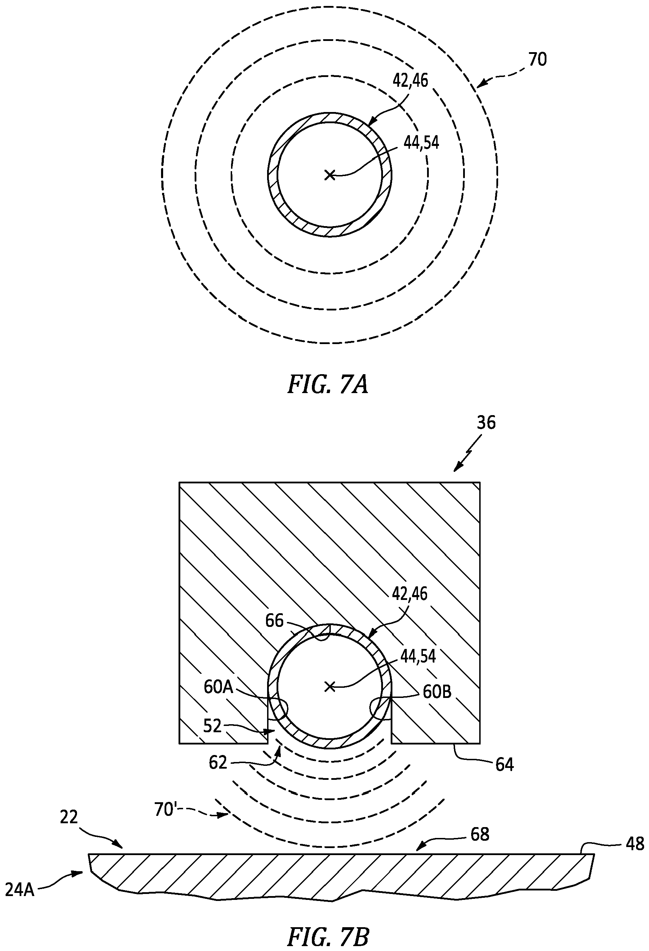

Referring to FIGS. 5 and 6, the induction welding coil 42 is received in the coil receptacle 52. The welding segment 46 of the induction welding coil 42 of FIGS. 5 and 6, for example, is seated within the coil receptacle 52. The induction welding coil 42 of FIG. 5 extends longitudinally along the centerline 44, 54 within (e.g., through) the coil receptacle 52. With this arrangement, the EM field concentrator 36 of FIGS. 5 and 6 covers at least a portion (or an entirety) of the welding segment 46 at the receptacle sides 60 and the receptacle end 66. The EM field concentrator 36 may thereby concentrate an electromagnetic field generated by the induction welding coil 42 and its welding segment 46 towards / onto a region 68 of the workpiece 22 and at least its (e.g., top) vertically closest workpiece body 24A through the receptacle opening 62. More particularly, rather than emit the electromagnetic field 70 of FIG. 7A radially all about the induction welding coil 42 and its welding segment 46, the electromagnetic field 70' of FIG. 7B emitted from the induction welding coil 42 and its welding segment 46 may be focused towards / onto the region 68. The EM field concentrator 36 may thereby effectively magnify a power of the electromagnetic field during the induction welding of the workpiece bodies 24 together.

Characteristics of the concentrated electromagnetic field may be tuned by adjusting placement of the induction welding coil 42 and its welding segment 46 within the EM field concentrator 36 and its coil receptacle 52. The concentrated electromagnetic field characteristics may also or alternatively be tuned by adjusting a configuration (e.g., cross-sectional geometry, etc.) of the coil receptacle 52.

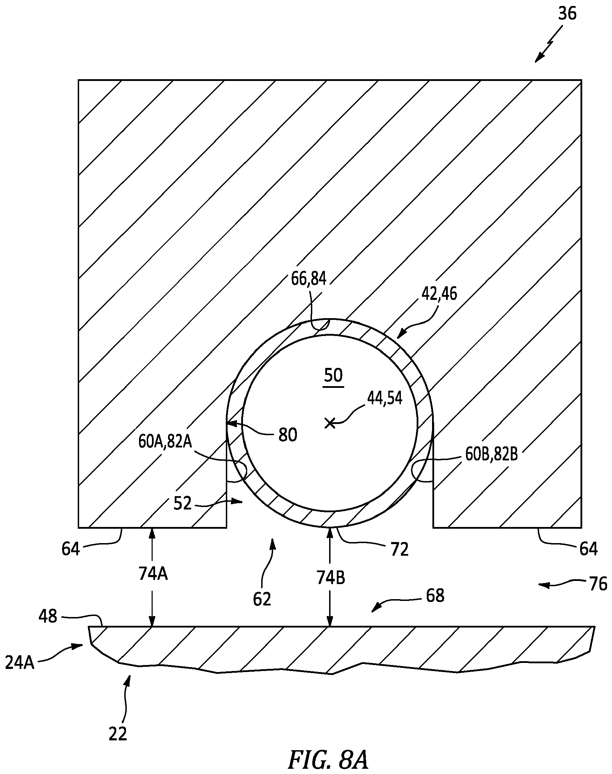

In some embodiments, referring to FIG. 8A, the induction welding coil 42 and its welding segment 46 may be arranged flush with the face surface 64. An exterior side 72 of the induction welding coil 42 and its welding segment 46 of FIG. 8A, for example, is vertically aligned with the face surface 64 at the receptacle opening 62. With such an arrangement, a vertical distance 74A through an open volume 76 (e.g., a cavity, an air gap, etc.) from the workpiece 22 and the face surface 64 may be equal to a vertical distance 74B through the open volume 76 from the workpiece 22 to the welding segment 46. The concentrated electromagnetic field may thereby have a relatively large focus area.

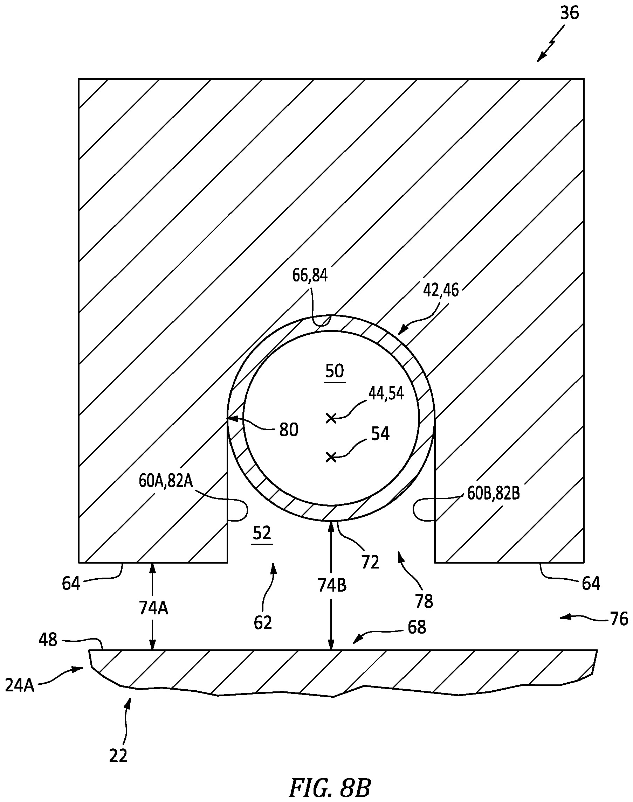

In some embodiments, referring to FIGS. 8B-D, the induction welding coil 42 and its welding segment 46 may be recessed vertically into the coil receptacle 52 from the face surface 64. The welding segment 46 of FIG. 8B, for example, is spaced vertically inward into the coil receptacle 52 from the receptacle opening 62 by an open receptacle volume 78 (e.g., a cavity, an air gap, etc.) such that the receptacle sides 60 project vertically beyond the coil exterior side 72. With such an arrangement, the vertical distance 74A is less than the vertical distance 74B through the open volumes 76 and 78 from the workpiece 22 to the welding segment 46. The concentrated electromagnetic field may thereby have a relatively narrow focus area.

In some embodiments, referring to FIGS. 8A and 8B, the coil receptacle 52 may be configured with a U-shaped cross sectional geometry when viewed, for example, in a reference plane perpendicular to the centerline 44, 54. The coil receptacle 52 of FIG. 8A and 8B, for example, is formed by a (e.g., U-shaped) receptacle surface 80 with one or more side portions 82A and 82B (generally referred to as "82") and an end portion 84. Each of the surface side portions 82 extends (e.g., along a vertical trajectory) from an end of the surface end portion 84 to a respective edge between the receptacle surface 80 and the face surface 64. Each surface side portion 82 of FIGS. 8A and 8B has a straight cross-sectional geometry when viewed in the reference plane. The surface end portion 84 extends between and to the surface side portions 82 and follows a non-straight (e.g., curved) trajectory about the centerline 44, 54. The surface end portion 84 of FIGS. 8A and 8B has a curved (e.g., arcuate, semi-circular, etc.) cross-sectional geometry when view in the reference plane.

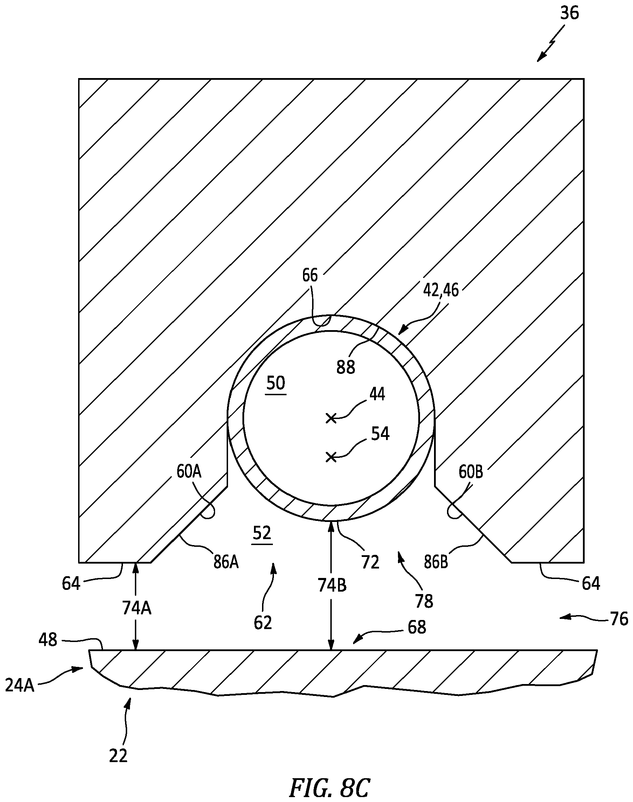

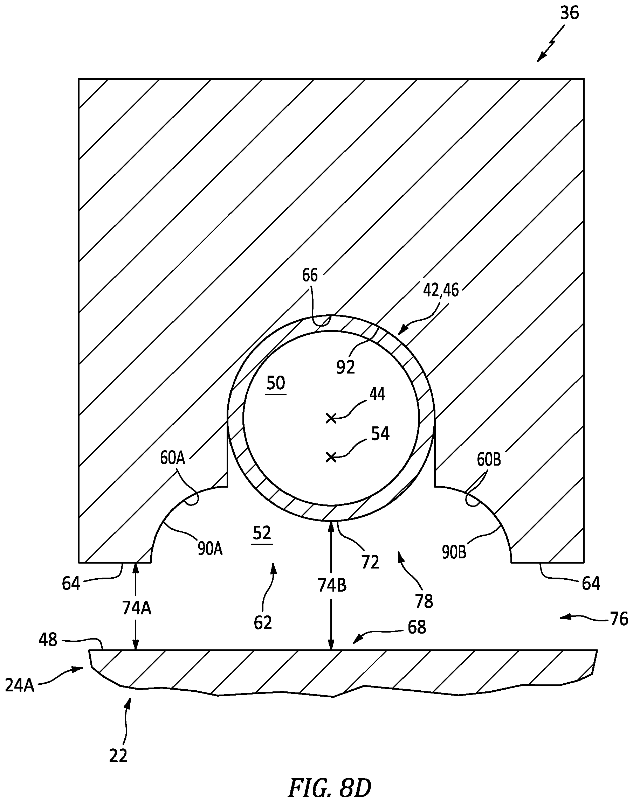

In some embodiments, referring to FIGS. 8C and 8D, the coil receptacle 52 may be configured with a flared cross-sectional geometry. The opposing receptacle sides 60 of FIGS. 8C and 8D, for example, flare laterally outward as the coil receptacle 52 extends vertically towards (e.g., to) the receptacle opening 62 and the face surface 64.

The coil receptacle 52 of FIG. 8C includes one or more side receptacle surfaces 86A and 86B (generally referred to as "86") and an end receptacle surface 88. Each of the side receptacle surfaces 86 extends (e.g., along a vertical trajectory and a lateral trajectory) from an end of the end receptacle surface 88 to a respective edge between the side receptacle surface 86 and the face surface 64. Each side receptacle surface 86 may have a straight cross-sectional geometry when viewed in the reference plane. The end receptacle surface 88 extends between and to the side receptacle surfaces 86 and follows a non-straight (e.g., curved) trajectory about the centerline 44, 54. The end receptacle surface 88 of FIG. 8C has a curved (e.g., arcuate, semi-circular, etc.) cross-sectional geometry when view in the reference plane. Alternatively, the receptacle surface 88 may have a U-shaped cross-sectional geometry and may form interior portions of the receptacle sides 60.

The coil receptacle 52 of FIG. 8D includes one or more side receptacle surfaces 90A and 90B (generally referred to as "90") and an end receptacle surface 92. Each of the side receptacle surfaces 90 extends (e.g., along a vertical trajectory and a lateral trajectory) from an end of the end receptacle surface 92 to a respective edge between the side receptacle surface 90 and the face surface 64. Each side receptacle surface 90 of FIG. 8D has a non-straight (e.g., curved, arcuate, splined, etc.) cross-sectional geometry when viewed in the reference plane. The end receptacle surface 92 extends between and to the side receptacle surfaces 90 and follows a non-straight (e.g., curved) trajectory about the centerline 44, 54. The end receptacle surface 92 may have a curved (e.g., arcuate, semi-circular, etc.) cross-sectional geometry when view in the reference plane. Alternatively, the receptacle surface 92 may have a U-shaped cross-sectional geometry and may form interior portions of the receptacle sides 60.

The coil receptacle 52 may be configured with a common (e.g., the same) cross-sectional geometry along at least a portion or an entirety of its longitudinal length across the EM field concentrator 36. Alternatively, the coil receptacle 52 may be configured with a changing cross-sectional geometry along at least a portion or the entirety of its longitudinal length across the EM field concentrator 36.

The induction welding coil 42 and its welding segment 46 may be attached to the EM field concentrator 36. The welding segment 46, for example, may be secured to the EM field concentrator 36 via a mechanical interface; e.g., an interference fit. The welding segment 46 may also or alternatively be secured to the EM field concentrator 36 via thermally conductive bonding material; e.g., thermally conductive paste. With such arrangements, the induction welding coil 42 and its welding segment 46 are thermally coupled to the EM field concentrator 36 through a thermally conductive interface; e.g., direct contact or through bonding material. With such an arrangement, the cooling device 32 (see FIG. 1) may direct its fluid (e.g., liquid coolant) through the internal bore 50 to cool the induction welding coil 42 as well as the thermally coupled EM field concentrator 36.

The EM field concentrator 36 may be configured as a monolithic body. The EM field concentrator 36, for example, may be cast, machined, additively manufactured and/or otherwise formed as a single unitary body. This body may be constructed from or otherwise include a metal material; e.g., an iron based metal. The present disclosure, however, is not limited to such an exemplary concentrator construction or materials.

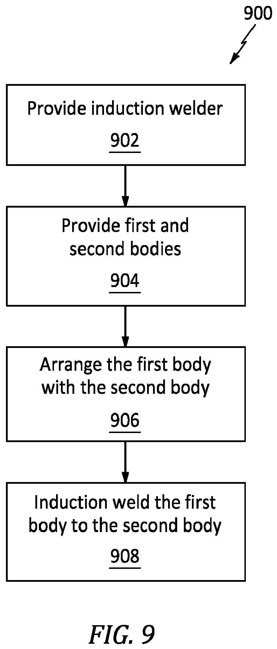

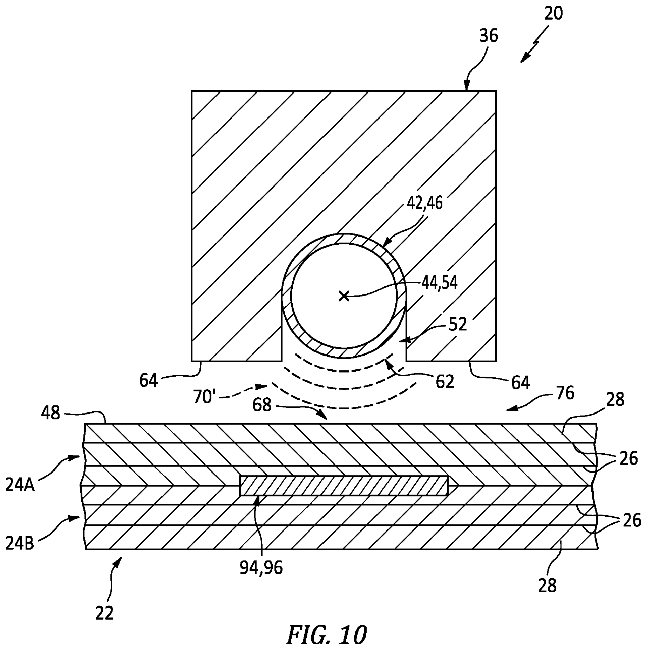

FIG. 9 is a flow diagram of a method 900 for manufacturing the workpiece 22. This workpiece 22 may be configured as a fan cowl for a nacelle of an aircraft propulsion system. The workpiece 22, however, may alternatively be configured as or may otherwise be included as part of another nacelle component, an aircraft control surface, a wing or an aircraft fuselage. The present disclosure, however, is not limited to manufacturing such exemplary components or to aircraft propulsion system applications. For example, the manufacturing method 900 may be performed for manufacturing any type or configuration of component where two or more bodies are joined via induction welding. For ease of description, the manufacturing method 900 is described below with reference to the induction welder 20 of FIG. 10. The manufacturing method 900 of the present disclosure, however, is not limited to any particular induction welder configurations.

In step 902, the induction welder 20 is provided.

In step 904, the first body 24A and the second body 24B are provided. Each of these workpiece bodies 24 may be configured as a thermoplastic body. Each of the workpiece bodies 24 of FIG. 10, for example, includes the fiber reinforcement 26 (e.g., carbon fibers) embedded within the thermoplastic matrix 28.

In step 906, the first body 24A is arranged with the second body 24B. In the arrangement of FIG. 10, the second body 24B is next to and vertically engages (e.g., contacts) the first body 24A. The first body 24A is separated from the induction welding coil 42 and its welding segment 46 as well as the EM field concentrator 36 by the open volume 76. The face surface 64, more particularly, faces and is vertically next to (e.g., but, slightly vertically spaced from) the first body 24A.

In step 908, the first body 24A is induction welded to the second body 24B. The power source 30 (see FIG. 1), for example, may provide a high frequency (e.g., alternating) current to the induction welding coil 42. The induction welding coil 42 may subsequently generate electromagnetic waves. These electromagnetic waves are concentrated by the EM field concentrator 36 onto the region 68 of the first body 24A. The concentrated electromagnetic waves 70' (e.g., the concentrated electromagnetic field) excite one or more reinforcement fibers of the fiber reinforcement 26 via eddy currents within the first body 24A and/or one or more reinforcement fibers of the fiber reinforcement 26 via eddy currents within the second body 24B. This excitation may elevate a temperature of the first body 24A and/or the second body 24B to a melting point temperature where the thermoplastic matrix 28 of the first body 24A and/or the thermoplastic matrix 28 of the second body 24B melts. A melt layer 94 may form at an interface between the first body 24A and the second body 24B. This melt layer 94 may bond the first body 24A and the second body 24B together upon cooling thereof. The induction welding coil 42 may be moved horizontally along the first body 24A (e.g., along the receptacle centerline 54) to provide an elongated welded seam 96 between the first body 24A and the second body 24B.

During the induction welding of the first and the second bodies 24A and 24B, the cooling device 32 of FIG. 1 may flow coolant through the coil structure 34. The cooling device 32 of FIG. 1, for example, may flow (e.g., circulate) the coolant sequentially through the first lead 40, the induction welding coil 42 and the second lead 41, or vice versa. Flowing of the coolant reduces the temperature of the coil structure 34 as well as the EM field concentrator 36 such that, for example, heat radiated from the induction welding coil 42 and/or the EM field concentrator 36 does not melt the thermoplastic matrix 28 of the adjacent first body 24A.

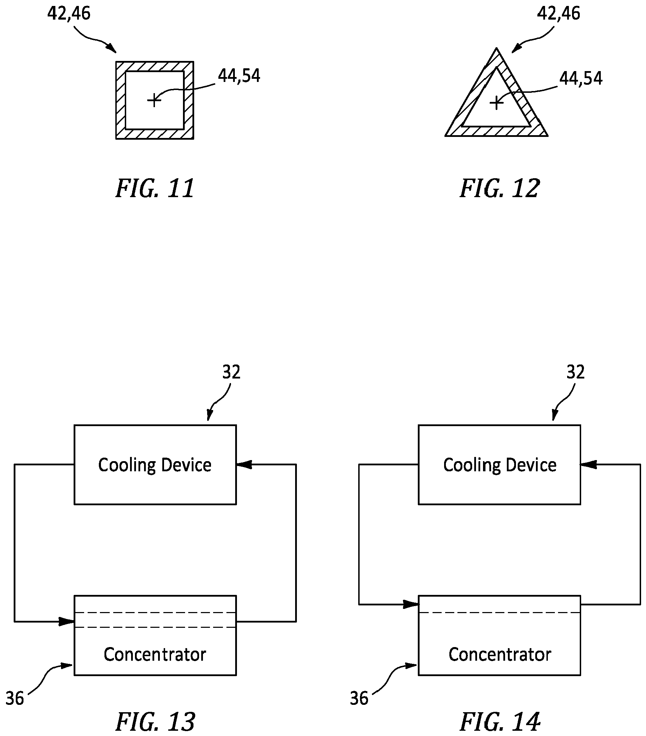

In some embodiments, referring to FIG. 10, at least a portion or an entirety of the induction welding coil 42 and its welding segment 46 may have a circular cross-sectional geometry when viewed, for example, in a reference plane perpendicular to the centerline 44, 54. The present disclosure, however, is not limited to such an exemplary configuration. For example, referring to FIGS. 11 and 12, at least a portion or the entirety of the induction welding coil 42 and its welding segment 46 may alternatively have a polygonal cross-sectional geometry when viewed, for example, in the reference plane. The polygonal cross-sectional geometry of FIG. 11 is square. The polygonal cross-sectional geometry of FIG. 12 is triangular. Such polygonal cross-sectional geometries may facilitate decreasing an average distance from the induction welding coil 42 and its welding segment 46 to the bodies being welded where, for example, a flat surface of the coil 42 is parallel with the bodies.

In some embodiments, referring to FIGS. 13 and 14, the EM field concentrator 36 may also or alternatively be directly cooled by the cooling device 32, or another cooling device. The cooling device 32 of FIG. 13, for example, is configured to flow the fluid (e.g., liquid coolant) through one or more internal passages in the EM field concentrator 36. The cooling device 32 of FIG. 14 is configured to flow the fluid through one or more peripheral channels adjacent and/or partially formed by the EM field concentrator 36.

While various embodiments of the present invention have been disclosed, it will be apparent to those of ordinary skill in the art that many more embodiments and implementations are possible within the scope of the invention. For example, the present invention as described herein includes several aspects and embodiments that include particular features. Although these features may be described individually, it is within the scope of the present invention that some or all of these features may be combined with any one of the aspects and remain within the scope of the invention. Accordingly, the present invention is not to be restricted except in light of the attached claims and their equivalents.

## Claims

1. A manufacturing method, comprising:
providing an induction welder (20) including a concentrator (36) and a coil (42), the concentrator (36) including a receptacle (52) and a face surface (64), the receptacle (52) projecting vertically into the concentrator (36) from the face surface (64) to an end (66) of the receptacle (52), the receptacle (52) extending laterally within the concentrator (36) between opposing sides (60A) of the receptacle (52), the receptacle (52) extending longitudinally within the concentrator (36) along a centerline (44), and the coil (42) seated and extending longitudinally along the centerline (44) within the receptacle (52);
providing a first thermoplastic body (24A) arranged with a second thermoplastic body (24B), the first thermoplastic body (24A) located vertically next to the face surface (64); and
induction welding the first thermoplastic body (24A) to the second thermoplastic body (24B), the induction welding comprising:
generating an electromagnetic field (70) with the coil (42); and
concentrating the electromagnetic field (70) with the concentrator (36) onto a region (68) of the first thermoplastic body (24A).

2. The manufacturing method of claim 1, wherein:
a first open space (78) extends vertically between the first thermoplastic body (24A) and the coil (42); and/or
a second open space (76) extends vertically between the first thermoplastic body (24A) and the concentrator (36).

3. The manufacturing method of claim 1 or 2, wherein the coil (42) is:
vertically flush with the face surface (64); or
recessed vertically into the receptacle (52) from the face surface (64).

4. The manufacturing method of any preceding claim, wherein the opposing sides (60A, 60B) of the receptacle (52) laterally flare out as the receptacle (52) extends vertically within the concentrator (36) to the face surface (64).

5. The manufacturing method of any preceding claim, wherein:
the concentrator (36) further includes a receptacle surface (80) at least partially forming one of the opposing sides (60A, 60B) of the receptacle (52); and
at least a portion of the receptacle surface (80), which extends to an edge between the receptacle surface (80) and the face surface (64), is configured with:
a straight sectional geometry; or
a non-straight sectional geometry.

6. The manufacturing method of any preceding claim, wherein:
the concentrator (36) further includes a or the receptacle surface (80) at least partially forming one of the opposing sides (60A) of the receptacle (52); and
the receptacle surface (80) extends along a trajectory to an edge between the receptacle surface (80) and the face surface (64), and the trajectory:
comprises a vertical component and a lateral component; or
consists essentially of a vertical component.

7. The manufacturing method of any preceding claim, wherein:
the concentrator (36) further includes a or the receptacle surface (80) forming at least the end (66) of the receptacle (52); and
the receptacle surface (80) is configured with a non-straight sectional geometry.

8. The manufacturing method of any preceding claim, wherein the coil (42) is thermally coupled to the concentrator (36) through a conductive interface.

9. The manufacturing method of any preceding claim, further comprising cooling at least one of the coil (42) or the concentrator (36) using liquid coolant, wherein the cooling optionally comprises directing the liquid coolant through a bore of the coil (42).

10. The manufacturing method of any preceding claim, wherein the coil (42) has a polygonal cross-sectional geometry.

11. An induction welder (20) for induction welding thermoplastic material, comprising:
a coil (42) configured to generate an electromagnetic field (70); and
a concentrator (36) configured to concentrate the electromagnetic field (70) onto a region (68) of the thermoplastic material, the concentrator (36) comprising a face surface (64) and a receptacle (52), the receptacle (52) projecting vertically into the concentrator (36) from an opening (62) in the face surface (64) to an end (66) of the receptacle (52), the receptacle (52) extending laterally within the concentrator (36) between opposing sides (60A, 60B) of the receptacle (52), and the receptacle (52) extending longitudinally within the concentrator (36) along a centerline (44);
the coil (42) vertically recessed into and extending longitudinally along the centerline (44) through the coil receptacle (52).

12. The induction welder (20) of claim 11, wherein the coil (42) is bonded to and thermally coupled with the concentrator (36).

13. The induction welder (20) of claim 11 or 12, wherein
the concentrator (36) further includes a receptacle surface (80); and
at least a portion of the receptacle surface (80) extends to an edge between the receptacle surface (80) and the face surface (64), and the portion of the receptacle surface (80) is configured with a straight sectional geometry.

14. An induction welder (20) for induction welding thermoplastic material, comprising:
a coil (42) configured to generate an electromagnetic field (70); and
a concentrator (36) configured to concentrate the electromagnetic field (70) onto a region (68) of the thermoplastic material, the concentrator (36) comprising a face surface (64) and a receptacle (52), the receptacle (52) projecting vertically into the concentrator (36) from the face surface (64) to an end (66) of the receptacle (52), the receptacle (52) extending laterally within the concentrator (36) between opposing sides (60A, 60B) of the receptacle (52), the opposing sides (60A, 60B) of the receptacle (52) flaring laterally out as the receptacle (52) extends vertically to an opening in the face surface (64), and the receptacle (52) extending longitudinally within the concentrator (36) along a centerline (44);
the coil (42) disposed in and extending longitudinally along the centerline (44) through the coil receptacle (52).

15. The induction welder (20) of claim 14, wherein the coil (42) is thermally coupled to the concentrator (36) through a conductive interface.
